# EUROPÄISCHE PATENTSCHRIFT

(11) **EP 0 923 677 B1**
(45) Veröffentlichungstag und Bekanntmachung des Hinweises auf die Patenterteilung: **05.12.2001**
(21) Anmeldenummer: 98934817.2
(22) Anmeldetag: 28.05.1998
(51) Int. Cl.: F16B 9/02

(54) **BEFESTIGUNGSELEMENT FÜR EINEN KÖRPER IN EINER WANDUNG**
ELEMENT FOR SECURING A BODY INTO A WALL
ELEMENT DE FIXATION D'UN CORPS DANS UNE PAROI

(30) Priorität: 11.07.1997 DE 19729736
(43) Veröffentlichungstag der Anmeldung: 23.06.1999
(73) Patentinhaber: ROBERT BOSCH GMBH, 70442 Stuttgart (DE)
(72) Erfinder: FAASS, Manfred, D-76327 Pfinztal (DE); SCHNEIDER, Michael, D-76307 Karlsbad (DE)
(86) Internationale Anmeldenummer: DE9801459
(87) Internationale Veröffentlichungsnummer: WO9902868

(56) Entgegenhaltungen:
- EP-A- 0 818 864
- WO-A-96/14512
- DE-A- 3 812 182
- FR-A- 2 591 450

## Beschreibung

### Stand der Technik

Die Erfindung geht aus von einem Befestigungselement für einen in eine Bohrung einer Wandung durchsteckbaren Körper, wie es bereits aus der DE 38 12 182 A1 bekannt ist. Bei diesem bekannten Befestigungselement wird ein Ultraschallwandler mit einem zylinderförmigen Körper zur Befestigung durch eine Bohrung in einer Stoßstange eines Kraftfahrzeuges durchgesteckt und von der Rückseite her durch ein federndes Element gegen das Herausfallen gesichert. Es hat sich gezeigt, daß ein derartiges Befestigungselement nur in einem eingeschränkten Bauwinkel zur Wandung eingebaut werden kann. Bei der Vielfalt der verschiedenen Fahrzeugtypen und der von Hersteller zu Hersteller auch differierenden Einbauorte des Ultraschallwandlers treten sehr unterschiedliche Neigungswinkel des Ultraschallwandlers bezogen zur Fahrbahn auf, so daß je nach Fahrzeugtyp verschiedene Befestigungselemente erforderlich sind, was wiederum die Zahl der zu fertigenden Befestigungselemente erhöht.

Aus der WO 96/14512 ist ein Befestigungselement bekannt, bei welchem zwischen dem Befestigungselement und dem Sensor, welcher durch eine Bohrung in einer wand durchsteckbar ist, ineinandergreifende Rasthaken angeordnet sind. Ein Teil des Befestigungselementes ist elastisch und derart verformbar, daß sich die ineinandergreifenden Rasthaken bei Verformung des elastischen Teils des Befestigungselementes voneinander lösen und daß das Befestigungselement vom Körper abnehmbar ist.

Üblicherweise wird also zum Einbau eines Körpers in einer Wandung, beispielsweise eines Ulraschallsensors in einem Stoßfänger, ein Befestigungselement verwendet, welches den Sensor aufnimmt und welches dann in eine Bohrung des Stoßfängers einsteckbar ist. Hierbei kann das Befestigungselement auf verschiedene Art und Weise im Kraftfahrzeug verankert werden. Wie bereits eingangs beschrieben kann die Halterung mittels Federkraft erfolgen, was den Vorteil hat, daß das Bauteil ohne Probleme wieder gelöst werden kann. Ebenso ist es bekannt, das Befestigungselement mittels Ultraschallschweißen im Stoßfänger zu verankern.

### Vorteile der Erfindung

Das erfindungsgemäße Befestigungselement mit den Merkmalen des Hauptanspruchs hat gegenüber dem bekannten Stand der Technik den Vorteil, daß der zu befestigende Körper mittels des Befestigungselementes in eine beliebig gekrümmte Wandung eingebaut werden kann. Die Zusammensetzung des Befestigungselementes aus einem flexiblen Bereiches zur Anpassung an die Wandung und eines starren Bereiches zur Aufnahme des zu befestigenden Körpers hat den Vorteil, daß ein Befestigungselement aufgrund seiner Anpaßbarkeit bei gleichzeitiger Formstabilität vielfältig einsetzbar ist. Desweiteren bietet das Vorsehen eines elastischen Zwischenstück zur Verbindung des starren und des flexiblen Bereiches des Befestigungselementes den Vorteil, daß eine Kraftwirkung auf den starren Bereich elastisch aufgefangen werden kann. Letztendlich können so Differenzen zwischen Anlagefläche und Befestigungselement flexibel aufgenommen werden.

Durch die in den abhängigen Ansprüchen aufgeführten Maßnahmen sind vorteilhafte Weiterbildungen und Verbesserungen des im Hauptanspruchs angegebenen Befestigungsteiles möglich.

Besonders vorteilhaft ist, daß der Grad der Flexibilität über die Nuttiefe zwischen den einzelnen Rippen eingestellt werden kann.

Das Befestigungselement kann sich aufgrund seines flexiblen Bereiches optimal an die Wandung anschmiegen, so daß das Befestigungselement durch Kleben beispielsweise durch ein doppelseitiges Klebesystem sehr gut mit der Wandung verbunden werden kann. Aufgrund der Flexibilität tritt an der Verbindungsstelle keine Schälwirkung auf, so daß die Verklebung nicht oder nur unwesentlich mechanisch belastet wird.

Das Vorsehen von Abstandshaltern an den Ecken des Befestigungselementes bietet den Vorteil, daß ein sehr gutes Ausrichten und Justieren des Befestigungselementes vor der endgültigen Befestigung mit der Wandung möglich ist.

Ein weiterer Vorteil ist durch das Vorsehen eines Bundes zur Aufnahme des einzubauenden Körpers gegeben, da keine zusätzlichen Vorrichtungen zur Zentrierung des zu befestigenden Körpers im Befestigungselement notwendig sind.

Letztendlich ist es möglich den Körper im Fall einer notwendig werdenden Reparatur oder eines Austausches einfach aus dem Befestigungselement nach hinten herauszunehmen, wodurch der Aufwand und damit die Kosten für einen Austausch wesentlich reduziert werden.

### Zeichnung

Ausführungsbeispiele der Erfindung sind in der Zeichnung dargestellt und in der nachfolgenden Beschreibung näher erläutert. Es zeigen:
Figur 1 das erfindungsgemäße Befestigungselement in perspektivischer Darstellung schräg von vorne,
Figur 2 das erfindungsgemäße Befestigungselement in Seitenansicht,
Figur 3 das erfindungsgemäße Befestigungselement in perspektivischer Darstellung schräg von hinten und
Figur 4 die Möglichkeit der Zusammenfügung beider Bereiche mit einer losen Verbindung.

### Beschreibung der Ausführungsbeispiele

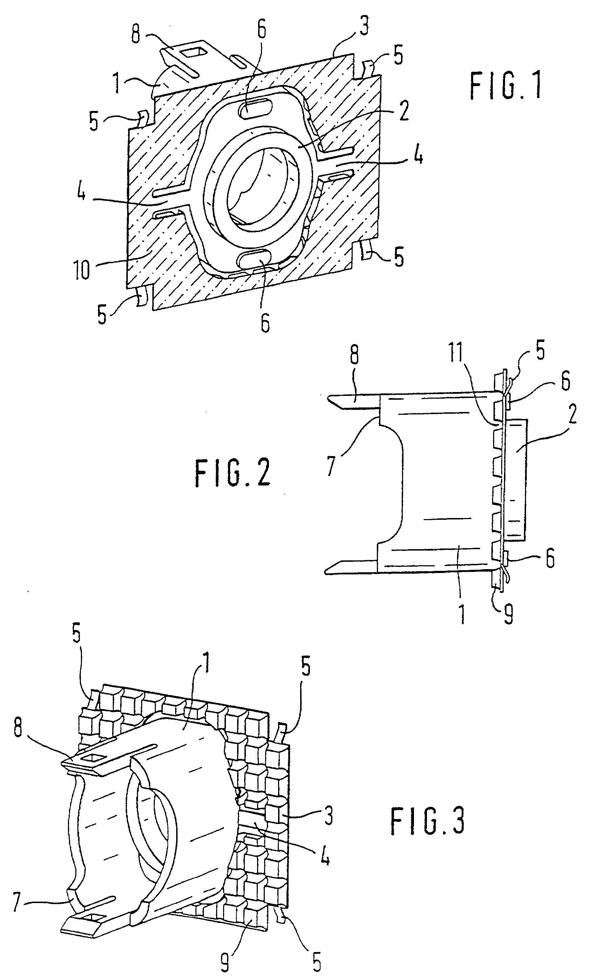

Figur 1 zeigt das erfindungsgemäße Befestigungselement in perspektivischer Darstellung schräg von vorne. Das Befestigungselement ist im wesentlichen aus zwei Teilen zusammengesetzt.

Der erste Teil besteht aus einem festen bzw. starren Bereich 1 zu Aufnahme des zu befestigenden hier nicht dargestellten Körpers. Der starre Bereich 1 ist im wesentlichen rohrförmig und wird nach vorne durch einen Bund 2 begrenzt. In den rohrförmigen Abschnitt des starren Bereiches 1 wird der zu befestigende Körper von der Rückseite eingeschoben, wobei an dem starren Bereich 1 ein Anschlag 7 vorgesehen ist, der die Einstecktiefe des zu befestigenden Körpers bestimmt und somit die definierte Einbaulage vorgibt. Der starre Bereich 1 weist außerdem federnde Laschen 8 auf, die den eingesteckten Körper beispielsweise einen Sensor zur Abstandsmessung vor dem Herausfallen schützen. Der zu befestigende Körper ist damit in dem festen Bereich 1 des Befestigungselementes fixiert.

Der Bund 2, der den starren Bereich 1 nach vorne begrenzt, stellt sicher, daß für die Montage des zu befestigenden Körpers keine zusätzlichen Vorrichtungen zur Zentrierung im Befestigungselement notwendig sind. Der Bund 2 ist so ausgebildet, daß er vor der Bohrung der Wandung, in der der zu befestigende, hier nicht dargestellte Körper aufgenommen werden soll, abschließt. Damit sind außer einer zylindrischen Bohrung in der Wandung keine zusätzlichen Elemente zur Fixierung des Befestigungselementes notwendig.

Der zweite Teil ist ein flexibler Bereich 3, der nachfolgend anhand der Figuren 2 und 3 näher erläutert werden soll. In allen Figuren wurden gleiche Bauteile mit gleichen Bezugszeichen versehen, so daß nicht jedes Bauteil jeweils nochmals im Detail erläutert werden soll. Der flexible Bereich 3 des Befestigungselementes besteht aus der in Figur 1 mit dem Bezugszeichen 10 bezeichneten Anlagefläche 10. Auf der Rückseite der Anlagefläche 10 befindet sich eine Noppenstruktur, die im Ausführungsbeispiel aus einer Vielzahl blockähnlicher Noppen 9 besteht. Die Gestaltung dieser Noppenstruktur ist jedoch nicht ausschließlich auf blockähnliche Noppen beschränkt, sondern es sind auch kegelförmige, zylindrische, halbkugelähnliche oder weitere Formen für die einzelnen Noppen 9 denkbar. Zwischen den einzelnen Noppen 9 befindet sich jeweils eine Nut 11, wobei über die Tiefe der einzelnen Nuten 11 zwischen den Noppen 9 die Flexibilität des flexiblen Bereiches 3 einstellbar ist. Je größer die Nuttiefe, um so flexibler ist dieses Bauteil. Bei dem erfindungsgemäßen Befestigungselement ist die Anlagefläche 10 mit der strukturierten Rückseite im wesentlichen rechteckig, wobei auch hier andere Formen denkbar sind. An den Eckpunkten der Anlagefläche 10 sind jeweils Abstandshalter 5 vorgesehen, welche ein Ausrichten und Justieren des Befestigungselementes ermöglichen. Die Stabilität der Abstandshalter 5 ist so ausgelegt, daß sie beim Andrücken der Anlagefläche 10 an die hier nicht dargestellte Montagefläche leicht nach hinten weggedrückt werden können.

Zur Verbindung des starren Bereiches 1 und des flexiblen Bereiches 3 dient ein elastisches Zwischenstück 4, welches den starren Bereich umfaßt und so angebracht ist, daß es an zwei Punkten mit dem flexiblen Bereich 3 verbunden ist. Auf dem starren Bereich 1 sind vorzugsweise zwei Auflagepunkte 6 vorgesehen, mit denen die Einbautiefe des Bundes in die Wandung eingestellt werden kann.

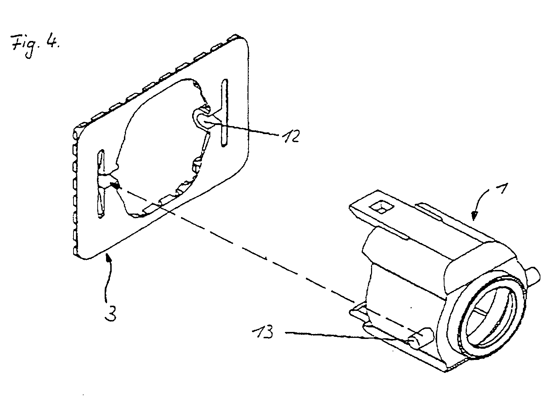

Die Verbindung zwischen dem starren Bereich 1 und dem flexiblen Bereich 3 kann fest oder lose erfolgen. Figur 4 zeigt im Gegensatz zu Figur 1 mit der dort dargestellten festen Verbindung mittels der elastischen Zwischenstücke 4 eine lose Verbindung. Der flexible Bereich 3 weist im Bereich seines Ausschnittes zur Aufnahme des starren Bereiches zwei Halbschalen 12 auf. Am starren Bereich 1 sind Bolzen 13 vorgesehen, die beim Zusammenbau in den Halbschalen 12 lagern. Die Verbindung der beiden Bereiche erfolgt über eine drehbare Gelenkverbidung. wobei die Halbschalen 12 ebenfalls elastisch sind. Diese lose Verbindung hat den Vorteil, daß ein flexibles Standardteil verwendet werden kann. Die Verbindung wird stabiler und der flexible Bereich ist durch die Möglichkeit der Verdrehung besser an die zu befestigende Fläche anzupassen

Die Anlagefläche 10 des flexiblen Bereiches kann mit der Innenwand der Wandung an der das Befestigungsteil angelegt wird, zur Befestigung flächig verklebt werden.

Üblicherweise bilden die Außenwand, die Bundoberfläche und die Oberfläche des einzubauenden Körpers im fertig montierten Zustand eine plane Oberfläche.

## Patentansprüche

1. Befestigungselement für einen Körper in einer Wandung mit einem starren Bereich (1), der im wesentlichen eine rohrähnliche Form zur Aufnahme des Körpers aufweist, mit einem flexiblen Bereich (3) zur Anpassung und Befestigung an eine nicht ebene Kontur der Wandung und mit einem elastischen Zwischenstück (4), mittels dessen der starre Bereich (1) und der flexible Bereich (3) an einer vorgegebenen Stelle verbunden sind.

2. Befestigungselement nach Anspruch 1, **dadurch gekennzeichnet, daß** der starre Bereich (1) einen kreisförmigen Bund (2) zur Aufnahme des zu befestigenden Körpers und einen Anschlag (7) für eine definierte Einbautiefe des Körpers im starren Bereich (1) aufweist.

3. Befestigungselement nach Anspruch 1 oder 2, **dadurch gekennzeichnet, daß** der starre Bereich (1) federnde Laschen (8) zum Schutz des Körpers vor Herausfallen aufweist.

4. Befestigungselement nach einem der vorherigen Ansprüche, **dadurch gekennzeichnet, daß** der flexible Bereich (3) eine Anlagefläche (10) aufweist, auf deren Rückseite eine Noppenstruktur ausgebildet ist, wobei anhand der Nuttiefe (11) zwischen den einzelnen Noppen (9) die Flexibilität des flexiblen Bereiches (3) in der Art einstellbar ist, daß mit größer werdender Nuttiefe die Flexibilität zunimmt.

5. Befestigungselement nach einem der vorherigen Ansprüche, **dadurch gekennzeichnet, daß** das elastische Zwischenstück (4) den starren Bereich (1) umfaßt und an wenigstens zwei Punkten mit dem flexiblen Bereich (3) verbunden ist.

6. Befestigungselement nach einem der vorherigen Ansprüche, **dadurch gekennzeichnet, daß** auf dem starren Bereich (1) mindestens zwei Auflagepunkte (6) zum Einstellen der Einbautiefe des Bundes (2) in die Wandung vorgesehen sind.

## Claims

1. Element for fastening a body in a wall, having a rigid region (1) which is essentially of tubular form for accommodating the body, having a flexible region (3) for adaptation to, and fastening onto, a non-planar contour of the wall, and having an elastic intermediate member (4) by means of which the rigid region (1) and the flexible region (3) are connected at a predetermined location.

2. Fastening element according to Claim 1,
**characterized in that** the rigid region (1) has a circular collar (2), for accommodating the body which is to be fastened, and a stop (7), for a defined installation depth of the body in the rigid region (1).

3. Fastening element according to Claim 1 or 2, **characterized in that** the rigid region (1) has resilient lugs (8) in order to prevent the body from dropping out.

4. Fastening element according to one of the preceding claims, **characterized in that** the flexible region (3) has an abutment surface (10), on the rear side of which a protuberance-containing structure is formed, it being possible, by way of the groove depth (11) between the individual protuberances (9), for the flexibility of the flexible region (3) to be set such that the flexibility increases as the groove depth increases.

5. Fastening element according to one of the preceding claims, **characterized in that** the elastic intermediate member (4) encloses the rigid region (1) and is connected to the flexible region (3) at at least two points.

6. Fastening element according to one of the preceding claims, **characterized in that** provided on the rigid region (1) are at least two bearing points (6) for setting the installation depth of the collar (2).

## Revendications

1. Elément de fixation d'un corps dans une paroi comportant une zone rigide (1) de forme essentiellement tubulaire, destinée à recevoir le corps, ainsi qu'une zone flexible (3) pour l'adaptation et la fixation sur un contour non plat de la paroi, et avec une pièce intermédiaire élastique (4) destinée à relier la zone rigide (1) et la zone flexible (3) à un emplacement prédéterminé.

2. Elément de fixation selon la revendication 1,
**caractérisé en ce que**
la zone rigide (1) possède un collet de forme circulaire (2) pour recevoir le corps à fixer, ainsi qu'une butée (7) correspondant à une profondeur définie du corps dans la zone rigide (1).

3. Elément de fixation selon la revendication 1 ou 2,
**caractérisé en ce que**
la zone rigide (1) est munie de pattes élastiques (8) pour empêcher le corps de se détacher.

4. Elément de fixation selon l'une quelconque des revendications précédentes,
**caractérisé en ce que**
la zone flexible (3) comporte une surface d'appui (10) dont la face arrière présente une structure en nopes, permettant de régler la flexibilité de la zone flexible (3) en fonction de la profondeur des rainures (11) entre les noppes (9), de sorte que la flexibilité augmente avec des profondeurs de rainure plus importantes.

5. Elément de fixation selon l'une quelconque des revendications précédentes,
**caractérisé en ce que**
la pièce intermédiaire élastique (4) entoure la zone rigide (1) et se trouve reliée en au moins deux points, à la zone flexible (3).

6. Elément de fixation selon l'une quelconque des revendications précédentes,
**caractérisé en ce que**
sur la zone rigide (1) sont disposés au moins deux points d'appui (6) poux le réglage de la profondeur de montage du collet (2) dans la paroi.
